# EUROPEAN PATENT SPECIFICATION

(11) **EP 0 418 701 B1**
(45) Date of publication and mention of the grant of the patent: **01.06.1994**
(21) Application number: 90117428.4
(22) Date of filing: 10.09.1990
(51) Int. Cl.: G21C 15/18

(54) **Reactor core decay heat removing system in a pressurized water reactor**
System zum Abführen der Reaktorkernzerfallswärme in einem Druckwasserreaktor
Système pour l'élimination de la chaleur résiduelle du coeur dans un réacteur à eau pressurisée

(30) Priority: 19.09.1989 JP 108576/89 U; 27.06.1990 JP 67221/90 U
(43) Date of publication of application: 27.03.1991
(73) Proprietor: MITSUBISHI JUKOGYO KABUSHIKI KAISHA, Tokyo (JP)
(72) Inventor: Matsuoka, Tsuyoshi, c/o Mitsubishi Jukogyo K.K., Tokyo (JP)
(74) Representative: Henkel, Feiler, Hänzel & Partner

(56) References cited:
- EP-A- 0 026 705
- EP-A- 0 232 186
- FR-A- 2 179 934
- FR-A- 2 584 228
- US-A- 3 718 539

## Description

The present invention relates to a pressurized water reactor, and more particularly to a reactor core decay heat removing system that is incorporatable into an emergency core cooling system in a pressurized water nuclear reactor.

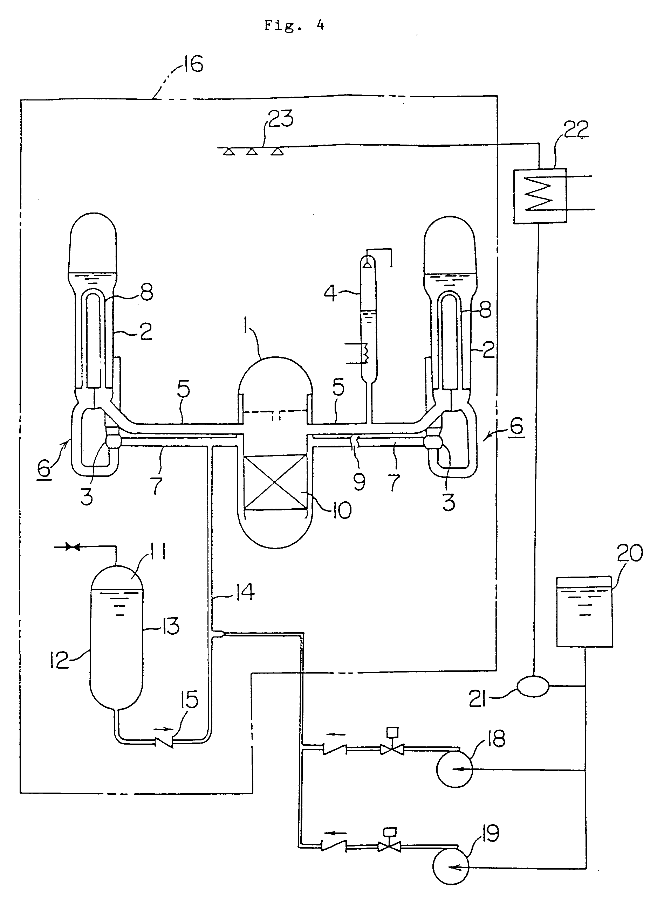

Fig. 4 generally shows a primary cooling system in a typical 2-loop pressurized water reactor in the prior art, which includes two sets of steam generators 2 and primary coolant pumps 3, respectively, and in the equipments for the primary cooling system are included a reactor vessel 1, steam generators 2, primary coolant circulation pumps 3, primary cooling loop 6 including primary coolant pipings 5 and 7 for connecting these to form a closed loop, and pressurizers 4 each connected to the primary cooling loop 6, etc.

Primary coolant heated in a nuclear core 10 within the reactor vessel 1 is conveyed from the reactor vessel 1 through a hot leg piping 5 in each loop 6 to U-shaped heat transfer tubes 8 within a steam generator 2 vertically installed and here, heat-exchange is effected with secondary coolant flowing outside of the heat-transfer tubes 8. The primary coolant cooled in such manner in the steam generator 2 is then head by the primary coolant circulation pump 3, and is again returned into the reactor vessel 1 through the cold leg piping 7.

However, in accidents in which a large drop in the pressure in the primary cooling system may be resulted and emergency core cooling system may be operated, for instance, during a loss of coolant accident following a breakdown at a location of a piping indicated by reference numeral 9 in the primary cooling system, due to outflow of primary coolant to the outside of the system from the broken location 9 in the piping, the nuclear core 10 is once exposed. In this case, while provision is made such that the operation of the nuclear reactor may be stopped immediately after occurrence of the accident, decay heat in a nuclear core continues to be generated even after the shut down of the nuclear reactor, since nuclear fuel is present within the nuclear core. In the event that the exposed state of the nuclear core should continue over a long period and the nuclear core cannot be cooled sufficiently, it may be supposed that the worst situation such as nuclear core melting would result from this decay heat. Accordingly, it is important in a loss of coolant accident to inject emergency core cooling water into the primary cooling system and to efficiently and promptly feed and accumulate the injected cooling water in the nuclear core, and hence emergency core cooling system is provided.

The emergency core cooling system in the prior art is composed of accumulated water injection system including an accumulated water injection tank 12, a high-pressure injection system including a high-pressure injection pump 19 or the like which necessitates an external drive source such as an A.C. power supply, and a low-pressure injection system including a low-pressure injection pump 18 or the like which likewise necessitates an external drive source such as an A.C. power supply. While the accumulated water injection tank 12 is shown only one in Fig. 4, it is a common practice to use one injection tank per one loop of the primary cooling system. This accumulated water injection tank 12 always holds borated water 13 under pressure with nitrogen gas 11, and when a loss of coolant accident occurs, a check valve 15 is automatically opened accompanying a decrease in the pressure in the primary cooling system, and thereby the borated water 13 is injected via a piping 14 into the cold leg piping 7 of the primary cooling system. In addition, the low-pressure injection pump 18 and the high-pressure injection pump 19 employ, as a water source, a refuelling water tank 20 which stores borated for the purpose of filling water in the nuclear reactor cavity upon refuelling, and provision is made such that under control of a controller connected to means (not shown) for detecting a drop in pressure in the primary cooling system, they are actuated in sequence, starting from the high-pressure injection pump 19 to perform injection of the water into the primary cooling system.

As the low-pressure injection pump 18, a residual heat removal pump which is used in the case of cold state shut down of a nuclear reactor, is utilized. Since this low-pressure pump 18 is also connected to a bottom sump (not shown) in a nuclear reactor containment vessel 16 so that water collected in the bottom sump may be used as being recirculated after the water in the refuelling water tank 20 has been consumed, in the low-pressure injection system is necessitated a heat-exchanger (not shown) for cooling the recirculating water.

Furthermore, to the refuelling water tank 20 is connected an containment vessel spray system for the purpose of reducing leakage of radioactive substance from the nuclear reactor containment vessel 16. This containment vessel spray system includes a containment vessel spray pump 21 which necessitates an external drive source such as an AC power supply, a heat-exchanger 22 and a containment vessel spray 23. This heat-exchanger 22 as well as the above-mentioned heat-exchanger in the low-pressure injection system have their secondary side connected to a coolant line of a nuclear reactor auxiliary system (not shown), and provision is made such that heat may be dissipated from that nuclear reactor auxiliary system to a sea water line.

As described above, although the emergency core cooling system in a pressurized water reactor in the prior art may involve no problem in that the accumulated water injection system, that is, the above-described accumulated water injection tank 12, is utilized for the purpose of injecting a large amount of emergency cooling water into the cold leg piping 7 of the primary cooling system urgently just after occurrence of an accident and thereby holding the water in the reactor vessel 1, the cooling system would rely upon a safety system mainly consisting of dynamic equipments (called "active safety system") such as the above-described low-pressure injection pump 18 and high-pressure injection pump 19 which necessitate an external drive source such as an AC power supply, in order to compensate the amount of the coolant evaporated and dissipated by nuclear core decay heat over a long period of time thereafter.

While the active safety system is excellent with respect to the points of converging capacity and expansion preventing capacity for an accident, operating procedures are complicated, reliability in operation is relatively less, and it cannot be said that the system involves problem at all in safety, as it includes instruments such as pumps which necessitate an external drive source such as an AC power supply.

It is therefore one object of the present invention to provide an improved emergency nuclear core decay heat removal system, which can substantially statically remove decay heat with use of limited dynamically driven instruments such as valves which are usually of high reliability. Such passive emergency cooling systems are disclosed in the documents EP-A-26.705, EP-A-232.186 and FR-A-2.584.228.

According to one feature of the present invention, there is provided a nuclear core decay heat removal system to be used in a pressurized water reactor, including a reactor vessel having a closure at its top and also having inlet nozzles and outlet nozzles for primary coolant, a nuclear core disposed within the reactor vessel, a steam generator defining a water chamber partitioned into an inlet chamber and an outlet chamber therein and installed so as to extend in a vertical direction with a primary coolant inlet nozzle and outlet nozzle provided respectively in the inlet chamber and the outlet chamber in the water chamber, a plurality of U-shaped tubes being communicated at their opposite end portions with the inlet chamber and the outlet chamber, a secondary cooling system connected to the steam generator and having an inlet pipe and an outlet pipe for circulatively feeding secondary coolant out of the U-shaped tubes, a coolant circulation pump, a hot-leg piping for connecting the outlet nozzle of the reactor vessel with the inlet nozzle of the steam generator, and a cold-leg piping for connecting the outlet nozzle of the steam generator with the inlet nozzle of the reactor vessel via the coolant circulation pump; which removal system comprises first pressure-reducing means connected to the closure of the reactor vessel, a first water source disposed higher than the secondary cooling system and communicated with the secondary cooling system via a piping having a valve, second pressure-reducing means connected to the secondary cooling system, and a second water source disposed higher than the hot-leg piping and the cold-leg piping and connected with a piping having a valve to be communicated with the inside of the nuclear reactor via the same pipings and wherein the steam generator has the inlet nozzle thereof arranged lower than the outlet nozzle of the reactor vessel, and the second water source has a water capacity enough to make at least the hot-leg piping and the cold-leg piping submerged by water discharged when the valve included in the piping connected to the second water source is opened.

According to another feature of the present invention, there is provided a nuclear core decay heat removal system to be used in a pressurized water reactor, including a reactor vessel having a closure at its top and also having a primary coolant inlet nozzle and outlet nozzle, a nuclear core disposed within the reactor vessel, a steam generator defining a water chamber partitioned into an inlet chamber and an outlet chamber, which chambers are provided with a primary coolant inlet nozzle and outlet nozzle, respectively, and a plurality of U-shaped tubes communicated at their opposite end portions with the inlet and outlet chamber, a secondary cooling system connected to the steam generator and having an inlet and outlet pipe for circulatively feeding secondary coolant out of the U-shaped tubes, a primary coolant circulation pump, a hot-leg piping for connecting the outlet nozzle of the reactor vessel with the inlet nozzle of the steam generator, and a cold-leg piping for connecting the outlet nozzle of the steam generator with the inlet nozzle of the reactor vessel via the primary coolant circulation pump; which removal system comprises a first water source disposed higher than the secondary cooling system and communicated with the secondary cooling system via a piping provided with a valve, pressure-reducing means connected to the secondary cooling system, and a second water source disposed higher than the hot-leg piping and the cold-leg piping and connected with a piping having a valve to be communicated with the reactor vessel via the same piping, and wherein the steam generator is installed so as to extend in a horizontal direction and includes a vent tube provided in the inlet chamber of the water chamber, and the second water source has a water capacity enough to make at least the hot-leg piping and the cold-leg piping submerged under water discharged when the valve included in the piping connected to the second water source is opened.

During normal operation of the nuclear reactor, primary coolant entered into a reactor vessel through a cold-leg piping connected to an inlet nozzle of the reactor vessel, is heated within a nuclear core, then comes out of an outlet nozzle of the reactor vessel, passes through a hot-leg piping and flows from an inlet chamber of a water chamber in a steam generator through the inside of U-shaped heat transfer tubes up to an outlet chamber, and from here it is fed again into the reactor vessel as pressurized by means of a circulation pump. When the primary coolant passes in the inside of the heat transfer tubes, it performs heat-exchange with secondary coolant flowing therearound and is cooled, and on the other hand, the secondary coolant is heated and vapourized into steam, which is used to drive a steam turbine for electric power generation.

If a loss of coolant accident results from an accident such as pipe breakdown in a primary cooling system, in the nuclear core decay heat removal system according to the present invention is put into operation, in order to prevent the worst imaginable accident such as nuclear core melting caused by decay heat.

More particularly, upon pressure drop in the primary cooling system accompanying coolant loss, pressure-reducing means is actuated thereby discharging incondensable gases such as hydrogen gas, oxygen gas and the like produced in the nuclear core from a valve in a piping connected to a closure of a reactor vessel into the containment vessel and also a valve provided in a piping connected to a second water source is opened thereby injecting water in the second water source into the containment vessel. Since the second water source is disposed higher than the hot-leg and cold-leg piping and also its capacity is large enough, upon opening of the above-mentioned valve, water would be discharged under a head difference, and would make the hot-leg and cold-leg piping submerged therein.

Consequently, the incondensable gases would not flow into the primary cooling system through the broken location in the primary cooling system, and according to the first feature of the present invention as mentioned before, because of the fact that a loop seal is formed between an inlet nozzle of a steam generator and an outlet nozzle of a reactor vessel, since the aforementioned inlet nozzle is disposed lower than the above-mentioned outlet nozzle, while according to the second feature of the present invention because of the fact that a steam generator is installed so as to extend in a horizontal direction and its water chamber is provided with a vent tube having a valve, the incondensable gases would not prevent natural circulation of the primary coolant flowing through the heat transfer tubes.

In order to remove decay heat by effecting heat-exchange with the secondary coolant in the steam generator by making use of such natural circulation of primary coolant, a secondary cooling system is reduced in pressure by actuating second pressure-reducing means connected to the secondary cooling system, also water in the first water source is injected into the secondary cooling system due to a head difference by opening a valve of the first water source disposed higher than the secondary cooling system, thereby heat-exchange is effected with the primary coolant flowing through the heat transfer tubes due to natural circulation, and in this way, removal of decay heat in a nuclear core by making use of a steam generator, is carried out.

According to the present invention, owing to the fact that means for preventing gas trapping is provided between a reactor vessel and a steam generator so that in a loss of coolant accident, incondensable gases produced in a nuclear core may not prevent natural circulation of coolant, it is possible to effect natural circulation of coolant within a primary cooling system loop by making use of a steam generator, there is no need to rely upon a safety system in the prior art (called "active safety system") which mainly consists of dynamic instruments such as a low-pressure injection pump and a high-pressure injection pump which necessitate an external drive source such as an AC power supply or the like, and therefore, operating procedures are simple and reliability of the safety system is high.

The above-mentioned and other objects, features and advantages of the present invention will become more apparent by reference to the following description of preferred embodiments of the invention taken in conjunction with the accompanying drawings.

In the accompanying drawings:
Fig. 1 is a schematic view of a pressurized water reactor including a nuclear core decay heat removal system according to a first preferred embodiment of the present invention;
Fig. 2 is an enlarged partial cross-section view of a loop seal provided in a primary cooling system of the pressurized water reactor shown in Fig. 1;
Fig. 3 is a schematic view of a pressurized water reactor including a nuclear core decay heat removal system according to a second preferred embodiment of the present invention; and
Fig. 4 is a schematic view of a pressurized water reactor including a nuclear core decay heat removal system in the prior art.

In the following, the present invention will be described in greater detail in connection to preferred embodiments with reference to the accompanying drawings. It is to be noted that in the accompanying drawings, same reference numerals designate identical or corresponding members or parts.

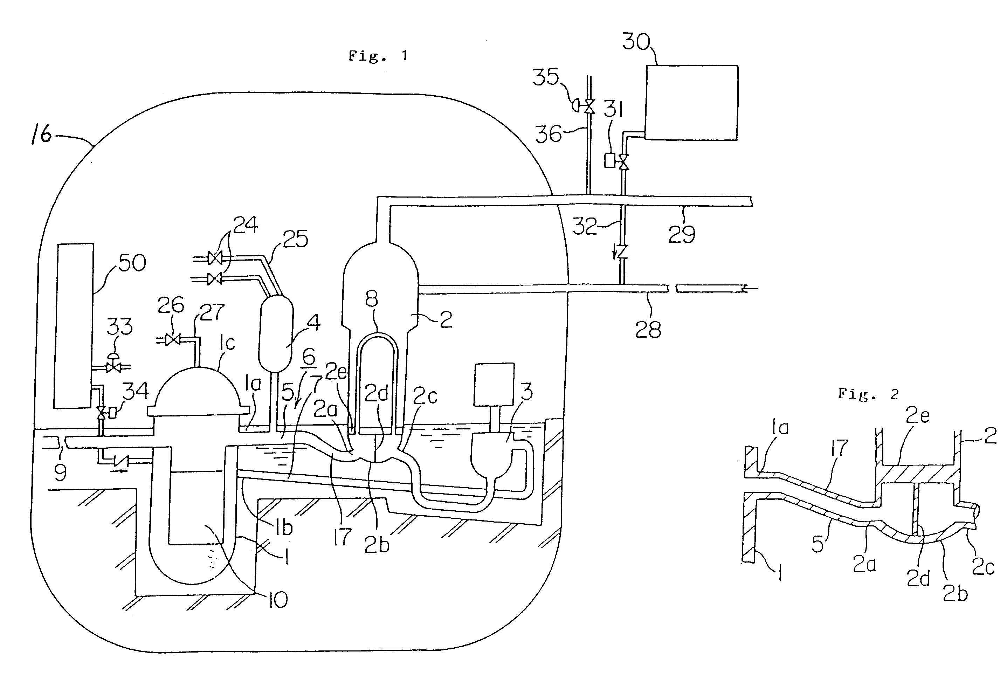

In Figs. 1 and 2, are shown an emergency core cooling system according to a first preferred embodiment of the present invention as applied to a pressurized water type nuclear power generation plant. Generally, a pressurized water type nuclear power generation plant includes a primary cooling system of 2 - 4 loops depending upon its output power, and in the example shown in Fig. 1, a primary cooling system of a 2-loop nuclear power plant (one loop only being illustrated) having two sets of steam generators 2 and primary coolant pumps 3, respectively, is schematically shown, and in the equipments for the primary cooling system are included a reactor vessel 1, steam generators 2, primary coolant circulation pumps 3, a primary cooling loop 6 consisting of a hot-leg piping 5 and a cold-leg piping 7 which connect the above-mentioned components to form a closed circuit, and a pressurizer 4, and these items are installed within a nuclear reactor containment vessel 16.

Primary coolant heated in a nuclear core 10 within the reactor vessel 1 flows from an outlet nozzle 1a of the reactor vessel 1 through the hot-leg pipings 5 in the respective loops and enters into a water chamber 2b in the steam generator 2 via an inlet nozzle 2a, then it is conveyed from here to U-shaped heat transfer tubes (U-shaped tubes) 8, wherein the primary coolant effects heat-exchange with secondary coolant flowing around the heat transfer tubes 8. The primary coolant cooled in this way in the steam generator 2 flows out of the steam generator 2 through an outlet nozzle 2c, a waterhead is given thereto by the primary coolant circulation pump 3, and the primary coolant is again returned into the reactor vessel 1 through an inlet nozzle 1b thereof via the cold-leg piping 7.

The water chamber 2b in the steam generator 2 is partitioned by a partition plate 2d into a hot-leg side portion (inlet chambers having an inlet nozzle 2a and a cold-leg side portion (outlet chamber) having an outlet nozzle 2c, and the above-described U-shaped heat transfer tube 8 has its one end communicated with the hot-leg side portion and the other end communicated with the cold-leg side portion through a header plate 2e.

In addition, as best seen in Fig. 2, since the vertical type steam generator 2 is disposed in such manner that its inlet nozzle 2a may be positioned lower than the outlet nozzle 1a of the reactor vessel 1, in the piping portion between the outlet nozzle 1a of the reactor vessel 1 and the inlet nozzle 2a of the steam generator 2 is formed a loop seal 17, which serves to prevent incondensable gas such as hydrogen gas, dissolved gas or the like from flowing into the steam generator 2 in an accident. The purpose of providing this loop seal 17 is to prevent incondensable gas from flowing into the steam generator 2 as described above.

To the steam generator 2 are connected a feed-water pipe (inlet pipe) 28 and a steam pipe (outlet pipe) 29 forming a secondary cooling system, feed water flowing from the feed water pipe 28 into the secondary side of the steam generator 2 is subjected to heat-exchange with the primary coolant accross the heat transfer tubes 8 and is heated, and it becomes steam and is discharged from the steam generator 2 through the steam pipe 29 to be sent to a steam turbine (not shown). This feed water pipe 28 is connected to a condensate tank (first water source) 30 via a piping 32 having a valve 31, and to the steam pipe 29 is connected a piping 36 having a large-capacity relief valve (second pressure-reducing means) 35, for instance, having a diameter of 25.4 cm (10 inches) in the case of a nuclear reactor of the class of 300,000 KWe output. The condensate tank 30 is disposed at least higher than the feed water pipe 28.

To the pressurizer 4 is connected a piping 25 connected to a plurality of (two in the illustrated embodiment) relief valves 24 of large capacity, for instance, having a diameter of 20.3 cm (8 inches) in the case of a nuclear reactor of the class of 300,000 KWe output, and to the closure 1c of the reactor vessel 1, preferably to its top is connected a piping 27 having a vent valve (first pressure-reducing means) 26 and opening in the accommodating container 16.

In addition, at a position at least higher than the hot-leg and cold-leg pipings 5 and 7 of the primary cooling loop 6 is installed an emergency storage tank (second water source) 50. This storage tank 50 is provided with a valve 33 for injecting stored water directly into the containment vessel 16, and a valve 34 for injecting stored water into the reactor vessel 1.

While the valves 26, 31, 34, 33 and 35 are shown only one for each in Fig. 1, each of them could be provided in multiple as connected in parallel to form a redundant system.

In the emergency core cooling system of the above-described construction, during an accident, when a controller not shown receives a first signal indicating pressure drop in the primary cooling system from well-known pressure sensing means (not shown), the vent valve 26 provided in the piping 27 connected to the closure 1c of the reactor vessel 1 is opened under control of the same controller, and incondensable gases such as hydrogen gas produced in the reactor core 20, oxygen gas, nitrogen gas and the like, which would prevent natural circulation of coolant as will be described later, are discharged jointly with steam from the reactor vessel 1 to the inside of the containment vessel 16.

Also, in response to the above-mentioned signal indicating pressure drop, the relief valve 24 of the pressurizer 4 is also opened, and thereby the pressure in the primary cooling system can be reduced early.

When the pressure in the primary cooling system has been further lowered thereby and a second signal is generated, the valves 33 and 34 of the emergency storage water tank 50 are opened, and the stored water is injected to the inside of the containment vessel 16 and into the nuclear core 10 due to a head difference. Due to injection of water caused by opening of the valves 33 and 34, in the primary cooling loop 6 at least the hot-leg piping 5 and the cold-leg piping 7 thereof are positioned under water.

On the other hand, the relief valve 35 connected to the secondary cooling system for the steam generator 2 is opened in response to the above-described first signal or a separate signal, thus the secondary side of the steam generator is reduced in pressure to the proximity of the atmospheric pressure, thereafter the valve 31 of the condensate tank 30 is opened, and the water in the condensate tank 30 is injected into the secondary side of the steam generator by a head difference.

At the time of this state, within the containment vessel, water is filled up to a level at least exceeding the hot-leg piping 5 and the cold-leg piping 7, and the breakdown location 9 which results in a loss of coolant accident is also submerged by water. Accordingly, decay heat generated in the nuclear core 10 is conveyed to the steam generator 2 through natural circulation of water in the nuclear core 10, water within the containment vessel 16 and water in the sound primary cooling loop 6, and in the same steam generator 2 heat-exchange is effected with water in the secondary side injected from the condensate tank 30, and thus the decay heat can be removed. In such natural circulation, since the breakdown location 9 is submerged, incondensable gases would not enter therethrough, and also, even if incondensable gases should be contained in the coolant in the sound primary cooling loop 6, the incondensable gases would be prevented from advancing into the heat transfer tubes 8 in the steam generator 2 at the location of the loop seal 17, as the loop seal 17 is formed on the inlet nozzle 2a side of the steam generator, and they cannot reach the heat transfer tubes 8.

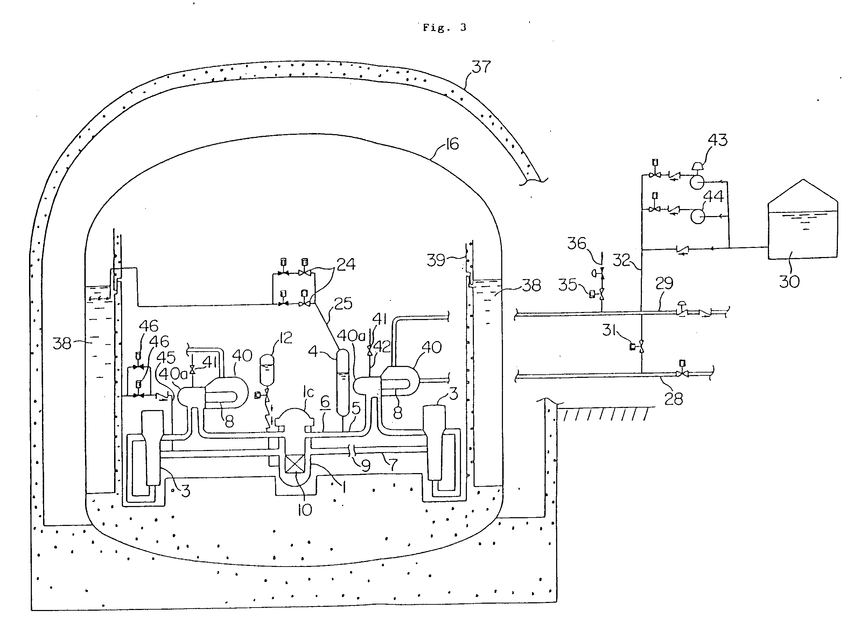

Next, the present invention will be described in connection to a second preferred embodiment illustrated in Fig. 3, and description will be made mainly on different points between the first preferred embodiment and the second preferred embodiment.

In Fig. 3, the outside of a containment vessel 16 is covered by an outer shield 37, which is disposed as separated from the outside surface and which is preferably of a steel plate structure. In addition, on the inside of the containment vessel 16 is defined an annular gravity drop tank (second water source) 38 by a concrete wall 39, and water is filled in the gravity drop tank 38. In the illustrated embodiment, this gravity drop tank 38 extends upwards about 10 m higher than the nuclear core 10 so that water can be injected under head difference as will be described later, and also it achieves the role of the refuelling water tank 30 as described previously with reference to Fig. 4.

While the piping 25 provided with the relief valve 24 is opened to the space within the containment vessel in the first preferred embodiment, in this second preferred embodiment a piping 25 having a relief valve 24 penetrates through the concrete wall 39 and extends into the gravity drop tank 38, and it opens there.

Also, while the loop seal 17 is formed between the outlet nozzle 1a of the reactor vessel 1 and the inlet nozzle 2a of the steam generator and the vent valve 26 is provided in the closure 1c of the reactor vessel 1 for the purpose of preventing incondensable gases from reaching the heat transfer tube 8 because the steam generator 2 is of vertical type in the first preferred embodiment shown in Fig. 1, in the second preferred embodiment since a steam generator 40 is installed so as to extend horizontally, in place of the loop seal 17, a piping (vent tube) 42 having a gas relief valve 41 is connected to an inlet chamber on the hot-leg side in the water chamber 40a.

Furthermore, a valve 31 is added to a piping 32 for a condensate tank 30, and a turbine-driven backup water feed pump 43 and a motor-driven backup water feed pump 44 are provided for backup purpose.

Next, description will be made on an operation of emergency core cooling system according to the second preferred embodiment at the time of loss of coolant accident.

In an early period of an accident, the pressure within the primary cooling system would become high-pressure - medium-pressure, and in order to inject water for cooling the reactor core at this time, it is preferable to quickly reduce the pressure in the primary cooling system and to use an accumulated water injection tank 12. To that end, if a pressure drop in the primary cooling system is detected by pressure sensing means in an early period of an accident and a first signal is output from a controller, in order to early reduce the pressure in the primary cooling system lower than an operation pressure (in the illustrated embodiment about 50 Kg/cm²) for the accumulated water injection tank (second water source) 12, a relief valve 24 of a pressurizer 4 is opened, and steam is flushed into the gravity drop tank 38 rather than the space within the containment vessel 16. Thereby the pressure in the primary cooling system is reduced lower than the operation pressure for the accumulated water injection tank 12, hence accumulated water is discharged into the reactor vessel 1, and the nuclear core 10 is cooled.

In a middle period of an accident, the pressure in the primary cooling system is held at medium-pressure - low-pressure, at this time for the purpose of injecting water to cool the nuclear core, a considerable amount of water is necessary, and as the installation would become too large if an accumulated water injection tank is utilized, a gravity drop tank 38 having a large capacity is used. Accordingly, when the pressure sensing means detects a further low pressure and the controller outputs a second signal, a valve 46 provided in a piping 45 communicating with the cold leg piping 7 and the gravity drop tank 38 is opened, hence the water in the gravity drop tank 38 is injected into the reactor vessel 1 due to a head difference, and thereby the nuclear core 10 is cooled. At this step of the process, among the primary cooling loop 6, at least the hot leg piping 5 and the cold-leg piping 7 are submerged by water accommodated in the accumulated water injection tank 12 and the gravity drop tank 38.

In this way, upon loss of coolant accident, emergency core cooling water is injected into the primary cooling system, and the injected water can be fed and accumulated efficiently and promptly within the reactor vessel.

On the other hand, thereafter at the time of long period cooling when the pressure within the primary cooling system and the pressure within the containment vessel have become nearly equal to each other, the water submerging the nuclear core is made to flow through the steam generator 40 by natural circulation, and decay heat in the nuclear core 10 is thereby removed. To that end, after the secondary side of the steam generator has been reduced in pressure by opening a relief valve 35, a valve 31 in a piping 32 connected to a condensate tank 30 is opened, and water is fed from the condensate pump 30 to a secondary side water feed pipe 28 under a head difference.

At the time of this state, as described above, within the containment vessel 16 water is filled up to the level exceeding at least the hot-leg piping 5 and the cold-leg piping 7 of the primary cooling loop 6, and the breakdown location 9 which caused the loss of coolant accident is also submerged by water. Accordingly, decay heat generated in the nuclear core 10 is, like the first preferred embodiment, conveyed to the steam generator 40 by natural circulation of water within the reactor core 10, water within the containment vessel 16 and water in the sound primary cooling loop 6, in the same steam generator 40 heat-exchange is effected via the heat-transfer tubes 8 with water in the secondary side injected from the condensate tank 30, the water is made to boil, the steam is discharged to the atmosphere through a relief valve 35, and thereby the decay heat is removed. At the time of the above-described natural circulation, since the breakdown location 9 is submerged by water, incondensable gases would not enter through the breakdown location, and even if incondensable gases should be contained in the coolant within the sound primary cooling loop 6, as the vent valve 41 of the piping 42 provided on the hot-leg side of the water chamber 40a of the steam generator 40 is opened, these incondensable gases would not be trapped but would be discharged into the inside space of the containment vessel, and they would never prevent natural circulation.

As described in detail above, according to the present invention, owing to the fact that means for preventing gas trap is provided between a reactor vessel and a steam generator so that incondensable gases produced in a reactor core may not prevent natural circulation of coolant upon a loss of coolant accident, it is possible to effect natural circulation of coolant within a primary cooling system by making use of a steam generator, there is no need to rely upon a safety system in the prior art (called "active safety system") which mainly consists of dynamic instruments such as a low-pressure injection pump and a high-pressure injection pump which necessitate an external drive source such as an AC power supply or the like, and therefore, manipulations for operation are simple and reliability of the safety system is high.

In addition, in the second preferred embodiment, owing to the fact that a piping having a relief valve and connected at one end to a pressurizer is opened at the other end into a gravity drop tank, upon accident the inside space of an containment vessel can be reduced in pressure without relying upon a containment vessel spray system in the prior art including a containment vessel spray pump which is a dynamic instrument, and this greatly contributes to improvement in reliability of a safety system.

Since many changes and modifications in design could be made to the above-described construction without departing from the scope of the present invention as defined in the claims, all matter contained in the above description and illustrated in the accompanying drawings shall be interpreted to be illustrative and not in a limiting sense.

## Claims

1. A nuclear core decay heat removal system to be used in a pressurized water reactor, provided with a reactor vessel (1) having a closure (1c) at its top and also having inlet nozzles (1b) and outlet nozzles (1a) for primary coolant, a nuclear core (10) disposed within said reactor vessel, a steam generator (2) defining a water chamber (2b) partitioned into an inlet chamber and an outlet chamber therein and installed so as to extend in a vertical direction with a primary coolant inlet nozzle (2a) and outlet nozzle (2c) provided respectively in the inlet chamber and the outlet chamber in said water chamber (2b), a plurality of U-shaped tubes (8) being communicated at their opposite end portions with said inlet chamber and said outlet chamber, a secondary cooling system connected to said steam generator (2) and having an inlet pipe (28) and an outlet pipe (29) for circulatively feeding secondary coolant out of said U-shaped tubes (8), a coolant circulation pump (3), a hot-leg piping (5) for connecting the outlet nozzle (1a) of said reactor vessel (1) with the inlet nozzle (2a) of said steam generator (2), and a cold-leg piping (7) for connecting the outlet nozzle (2c) of said steam generator (2) with the inlet nozzle (1b) of said reactor vessel (1) via said coolant circulation pump (3); characterized in that said decay heat removal system comprises first pressure-reducing means (26) connected to the closure (1c) of said reactor vessel (1), a first water source (30) disposed higher than said secondary cooling system and communicated with said secondary cooling system via a piping (32) having a valve (31), second pressure-reducing means (35) connected to said secondary cooling system, and a second water source (50) disposed higher than said hot-leg piping (5) and said cold-leg piping (7) and connected with a piping having a valve (34) to be communicated with the inside of said reactor vessel via said piping; and that said steam generator (2) has said inlet nozzle (2a) thereof arranged lower than the outlet nozzle (1a) of said reactor vessel, and said second water source (50) has a water capacity large enough to make at least said hot-leg piping (5) and said cold-leg piping (7) submerged by water discharged when said valve (34) included in the piping connected to said second water source (50) is opened.

2. A nuclear core decay heat removal system to be used in a pressurized water reactor as claimed in Claim 1, characterized in that said first pressure-reducing means (24) connected to the closure (1c) of said reactor vessel opens in a containment vessel (16).

3. A nuclear core decay heat removal system to be used in a pressurized water reactor, provided with a reactor vessel (1) having a closure (1c) at its top and also having a primary coolant inlet nozzle (1b) and outlet nozzle (1a), a nuclear core (10) disposed within said reactor vessel (1), a steam generator (40) defining a water chamber (40a) partitioned into an inlet chamber and an outlet chamber, which chambers are provided with a primary coolant inlet nozzle and outlet nozzle, respectively, and a plurality of U-shaped tubes (8) communicated at their opposite end portions with said inlet and outlet chamber, a secondary cooling system connected to said steam generator and having an inlet and outlet pipe (28,29) for circulatively feeding secondary coolant out of said U-shaped tubes (8), a primary coolant circulation pump (3), a hot-leg piping (5) for connecting the outlet nozzle of said reactor vessel with the inlet nozzle of said steam generator, and a cold-leg piping (7) for connecting the outlet nozzle of said steam generator (40) with the inlet nozzle of said reactor vessel via said primary coolant circulation pump; characterized in that said decay heat removal system comprises a first water source (30) disposed higher than said secondary cooling system and communicated with said secondary cooling system via a piping (32) provided with a valve (31), pressure-reducing means (35) connected to said secondary cooling system, and a second water source (12,38) disposed higher than said hot-leg piping (5) and said cold-leg piping (7) and connected with a piping having a valve to be communicated with said reactor vessel (1) via said piping; and that said steam generator (40) is installed so as to extend in a horizontal direction and includes a vent tube (42) provided in the inlet chamber of said water chamber (40a), and said second water source (12,38) has a water capacity large enough to make at least said hot-leg piping (5) and said cold-leg piping (7) submerged under water discharged when said valve included in the piping connected to said second water source (12,38) is opened.

4. A nuclear core decay heat removal system to be used in a pressurized water reactor as claimed in Claim 3, characterized in that pressure-reducing means (24) of a pressurizer (4) connected to a primary cooling loop is provided, and said pressure-reducing means (24) is connected to the inside of said second water source (38).

5. A nuclear core decay heat removal system to be used in a pressurized water reactor as claimed in Claim 3, characterized in that said second water source (38) is constructed inside of said containment vessel (16) as partitioned annularly by a concrete wall.

## Patentansprüche

1. Reaktorkernzerfallswärme-Abführsystem zur Verwendung bei einem Druckwasserreaktor, umfassend ein Reaktorgefäß (1) mit einem Verschluß (Deckel) (1c) an seiner Oberseite sowie mit Einlaßdüsen (1b) und Auslaßdüsen (1a) für Primärkühlmittel, einen im Reaktorgefäß angeordneten Reaktorkern (10), einen Dampfgenerator (12), der (darin) eine in eine Einlaßkammer und eine Auslaßkammer unterteilte Wasserkammer (2b) festlegt und so eingebaut ist, daß er sich in einer lotrechten Richtung erstreckt, wobei eine Primärkühlmittel-Einlaßdüse (2a) und eine -Auslaßdüse (2c) jeweils in Einlaßkammer bzw. Auslaßkammer in der Wasserkammer (2b) vorgesehen sind, und wobei mehrere U-förmige Rohre (8) an ihren gegenüberliegenden Endabschnitten jeweils mit der Einlaßkammer und der Auslaßkammer in Verbindung stehen, ein an den Dampfgenerator (2) angeschlossenes Sekundärkühlsystem mit einem Einlaßrohr (28) und einem Auslaßrohr (29) zum zirkulierenden oder umwälzenden Fördern von Sekundärkühlmittel aus den U-förmigen Rohren (8), eine Kühlmittelumwälzpumpe (3), eine Heißzweig(rohr)leitung (5) zum Verbinden der Auslaßdüse (1a) des Reaktorgefäßes (1) mit der Einlaßdüse (2a) des Dampfgenerators (2) und eine Kaltzweig(rohr)leitung (7) zum Verbinden der Auslaßdüse (2c) des Dampfgenerators (2) mit der Einlaßdüse (1b) des Reaktorgefäßes (1) über die Kühlmittelumwälzpumpe (3), dadurch gekennzeichnet, daß das Zerfallswärme-Abführsystem ferner umfaßt: eine an den Verschluß (1c) des Reaktorgefäßes (1) angeschlossene erste Druckmindereinheit (26), eine(n) erste(n) Wasserquelle oder -vorrat (30), die bzw. der höher angeordnet ist als das Sekundärkühlsystem und mit letzterem über eine Rohr-Leitung (32) mit einem Ventil (31) kommuniziert, eine an das Sekundärkühlsystem angeschlossene zweite Druckmindereinheit (35) sowie eine(n) zweite(n) Wasserquelle oder -vorrat (50), die bzw. der höher angeordnet ist als die Heißzweigleitung (5) und die Kaltzweigleitung (7) und die mit einer Leitung mit einem Ventil (34) zu ihrer Verbindung mit dem Inneren des Reaktorgefäßes über diese Leitung verbunden ist, und daß die Einlaßdüse (2a) des Dampfgenerators (2) tiefer angeordnet ist als die Auslaßdüse (1a) des Reaktorgefäßes und die zweite Wasserquelle (50) ein ausreichend großes Wasserfassungsvermögen besitzt, um zumindest die Heißzweigleitung (5) und die Kaltzweigleitung (7) mit ausgetragenem Wasser zu überfluten, wenn das in der an die zweite Wasserquelle (50) angeschlossenen Leitung vorgesehene Ventil (34) geöffnet wird.

2. Reaktorkernzerfallswärme-Abführsystem zur Verwendung bei einem Druckwasserreaktor nach Anspruch 1, dadurch gekennzeichnet, daß die an den Verschluß (1c) des Reaktorgefäßes angeschlossene erste Druckmindereinheit (24) in einen Aufnahmebehälter (16) mündet.

3. Reaktorkernzerfallswärme-Abführsystem zur Verwendung bei einem Druckwasserreaktor, umfassend ein Reaktorgefäß (1) mit einem Verschluß (Deckel) (1c) an seiner Oberseite sowie mit einer Einlaßdüse (1b) und einer Auslaßdüse (1a) für Primärkühlmittel, einen im Reaktorgefäß (1) angeordneten Reaktorkern (10), einen Dampfgenerator (40), der eine in eine Einlaßkammer und eine Auslaßkammer unterteilte Wasserkammer (40a) festlegt, welche Kammern mit einer Primärkühlmittel-Einlaßdüse bzw. einer -Auslaßdüse versehen sind, wobei mehrere U-förmige Rohre (8) an ihren gegenüberliegenden Endabschnitten jeweils mit der Einlaßkammer und der Auslaßkammer in Verbindung stehen, ein an den Dampfgenerator angeschlossenes Sekundärkühlsystem mit Einlaß- und Auslaßrohr (28, 29) zum zirkulierenden oder umwälzenden Fördern von Sekundärkühlmittel aus den U-förmigen Rohren (8), eine Primärkühlmittelumwälzpumpe (3), eine Heißzweig(rohr)leitung (5) zum Verbinden der Auslaßdüse des Reaktorgefäßes mit der Einlaßdüse des Dampfgenerators und eine Kaltzweig(rohr)leitung (7) zum Verbinden der Auslaßdüse des Dampfgenerators (40) mit der Einlaßdüse des Reaktorgefäßes über die Primärkühlmittelumwälzpumpe, dadurch gekennzeichnet, daß das Zerfallswärme-Abführsystem ferner umfaßt: eine erste Wasserquelle (30), die höher angeordnet ist als das Sekundärkühlsystem und die mit letzterem über eine mit einem Ventil (31) versehene Rohr-Leitung (32) in Verbindung steht, eine an das Sekundärkühlsystem angeschlossene Druckmindereinheit (35) und eine zweite Wasserquelle (12, 38), die höher angeordnet ist als die Heißzweigleitung (5) und die Kaltzweigleitung (7) und die mit einer ein Ventil aufweisenden Leitung zur Verbindung mit dem Reaktorgefäß (1) über diese Leitung verbunden ist, und daß der Dampfgenerator (40) so eingebaut ist, daß er sich in einer waagerechten Richtung erstreckt, und ein in der Einlaßkammer der Wasserkammer (40a) vorgesehenes Entlüftungsrohr (42) aufweist, und die zweite Wasserquelle (12, 38) ein ausreichend großes Wasserfassungsvermögen besitzt, um zumindest die Heißzweigleitung (5) und die Kaltzweigleitung (7) mit ausgetragenem Wasser zu überfluten, wenn das in der an die zweite Wasserquelle (12, 38) angeschlossenen Leitung vorgesehene Ventil geöffnet wird.

4. Reaktorkernzerfallswärme-Abführsystem zur Verwendung bei einem Druckwasserreaktor nach Anspruch 3, dadurch gekennzeichnet, daß eine Druckmindereinheit (24) eines an einen Primärkühlkreis angeschlossenen Druckerzeugers (4) vorgesehen ist und die Druckmindereinheit (24) mit dem Inneren der zweiten Wasserquelle (38) verbunden ist.

5. Reaktorkernzerfallswärme-Abführsystem zur Verwendung bei einem Druckwasserreaktor nach Anspruch 3, dadurch gekennzeichnet, daß die zweite Wasserquelle (38) im Inneren des Aufnahmebehälters (16) so ausgestaltet ist, daß sie durch eine Betonwand ringförmig unterteilt oder abgetrennt ist.

## Revendications

1. Installation d'élimination de la chaleur de désintégration du coeur nucléaire à utiliser dans un réacteur à eau pressurisée, comprenant une cuve (1) de réacteur avec un couvercle (1c) sur le dessus et également des tubulures d'entrée (1b) et de sortie (1a) pour un caloporteur primaire, un coeur nucléaire (10) placé à l'intérieur de ladite cuve de réacteur, un générateur de vapeur (2) qui définit une chambre à eau (2b) cloisonnée en une chambre d'entrée et une chambre de sortie et installé pour s'étendre dans la direction verticale avec une tubulure d'entrée (2a) et une tubulure de sortie (2c) pour caloporteur primaire respectivement ménagées dans la chambre d'entrée et dans la chambre de sortie de ladite chambre à eau (2b), une pluralité de tubes (8) en forme de U communiquant en leurs parties d'extrémités opposées avec ladite chambre d'entrée et ladite chambre de sortie, une installation de refroidissement secondaire reliée audit générateur de vapeur (2) et ayant un tube d'entrée (28) et un tube de sortie (29) pour faire circuler un caloporteur secondaire hors desdits tubes (8) en forme de U, une pompe (3) de circulation de caloporteur, une canalisation de branche chaude (5) pour relier la tubulure de sortie (1a) de ladite cuve (1) du réacteur avec la tubulure d'entrée (2a) dudit générateur de vapeur (2), et une canalisation de branche froide (7) pour relier la tubulure de sortie (2c) dudit générateur de vapeur (2) à la tubulure d'entrée (1b) de ladite cuve (1) du réacteur par l'intermédiaire de ladite pompe (3) de circulation du caloporteur,
**caractérisée** en ce que ladite installation d'élimination de la chaleur de désintégration comprend un premier moyen (26) de réduction de la pression relié audit couvercle (1c) de ladite cuve (1) du réacteur, une première source d'eau (30) placée plus haut que ladite installation de refroidissement secondaire et qui communique avec ladite installation de refroidissement secondaire par l'intermédiaire d'une canalisation (32) comprenant une vanne (31), un second moyen (35) de réduction de la pression relié à ladite installation de refroidissement secondaire et une seconde source d'eau (50) placée plus haut que ladite canalisation de branche chaude (5) et ladite canalisation de branche froide (7) et reliée à une canalisation ayant une vanne (34) pour être mise en communication avec l'intérieur de ladite cuve de réacteur par l'intermédiaire de ladite canalisation, et en ce que ledit générateur de vapeur (2) a sa tubulure d'entrée (2a) disposée plus bas que la tubulure de sortie (1a) de ladite cuve de réacteur et ladite seconde source d'eau (50) a une capacité en eau suffisamment importante pour qu'au moins ladite canalisation de branche chaude (5) et ladite canalisation de branche froide (7) soient submergées par de l'eau envoyée quand ladite vanne (34) contenue dans ladite canalisation reliée à ladite seconde source d'eau (50) est ouverte.

2. Installation d'élimination de la chaleur de désintégration du coeur nucléaire à utiliser dans un réacteur à eau pressurisée selon la revendication 1, caractérisée en ce que ledit premier moyen (24) de réduction de la pression relié au couvercle (1c) de ladite cuve de réacteur s'ouvre dans une cuve de confinement (16).

3. Installation d'élimination de la chaleur de désintégration du coeur nucléaire à utiliser dans un réacteur à eau pressurisée, comprenant une cuve (1) de réacteur avec un couvercle (1c) sur le dessus et également une tubulure d'entrée (1b) et une tubulure de sortie (1a) pour un caloporteur primaire, un coeur nucléaire (10) placé à l'intérieur de ladite cuve (1) de réacteur, un générateur de vapeur (40) qui définit une chambre à eau (40a) cloisonnée en une chambre d'entrée et une chambre de sortie, chambres qui sont munies respectivement d'une tubulure d'entrée et d'une tubulure de sortie pour caloporteur primaire, et une pluralité de tubes (8) en forme de U communiquant en leurs parties d'extrémités opposées avec ladite chambre d'entrée et ladite chambre de sortie, une installation de refroidissement secondaire reliée audit générateur de vapeur et ayant des conduites d'entrée et de sortie (28, 29) pour faire circuler un caloporteur secondaire hors desdits tubes (8) en forme de U, une pompe (3) de circulation de caloporteur primaire, une canalisation de branche chaude (5) pour relier la tubulure de sortie de ladite cuve du réacteur avec la tubulure d'entrée dudit générateur de vapeur, et une canalisation de branche froide (7) pour relier la tubulure de sortie dudit générateur de vapeur (40) à la tubulure d'entrée de ladite cuve du réacteur par l'intermédiaire de ladite pompe de circulation du caloporteur primaire,
**caractérisée** en ce que ladite installation d'élimination de la chaleur de désintégration comprend une première source d'eau (30) placée plus haut que ladite installation de refroidissement secondaire et qui communique avec ladite installation de refroidissement secondaire par l'intermédiaire d'une canalisation (32) munie d'une vanne (31), un moyen (35) de réduction de la pression relié à ladite installation de refroidissement secondaire et une seconde source d'eau (12, 38) placée plus haut que ladite canalisation de branche chaude (5) et ladite canalisation de branche froide (7) et reliée à une canalisation ayant une vanne pour être mise en communication avec ladite cuve (1) de réacteur par l'intermédiaire de ladite canalisation, et en ce que ledit générateur de vapeur (40) est installé pour s'étendre dans la direction horizontale et comprend un tube de purge (42) placé dans la chambre d'entrée de ladite chambre à eau (40a), et ladite seconde source d'eau (12, 38) a une capacité en eau suffisamment importante pour qu'au moins ladite canalisation de branche chaude (5) et ladite canalisation de branche froide (7) soient submergées par de l'eau envoyée quand ladite vanne contenue dans la canalisation reliée à ladite seconde source d'eau (12, 38) est ouverte.

4. Installation d'élimination de la chaleur de désintégration du coeur nucléaire à utiliser dans un réacteur à eau pressurisée selon la revendication 3, caractérisée en ce qu'il existe un moyen (24) de réduction de la pression d'un appareil de pressurisation (4) relié à une boucle de refroidissement primaire et ledit moyen (24) de réduction de la pression est relié à l'intérieur de ladite seconde source d'eau (38).

5. Installation d'élimination de la chaleur de désintégration du coeur nucléaire à utiliser dans un réacteur à eau pressurisée selon la revendication 3, caractérisée en ce que ladite seconde source d'eau (38) est construite à l'intérieur de ladite cuve de confinement (16) sous forme d'un cloisonnement annulaire à l'aide d'une paroi en béton.
